# EUROPEAN PATENT SPECIFICATION

(11) **EP 1 608 722 B1**
(45) Date of publication and mention of the grant of the patent: **13.12.2006**
(21) Application number: 04722888.7
(22) Date of filing: 24.03.2004
(51) Int. Cl.: C10G 11/22, C10G 50/00, C10G 57/00, C10G 57/02

(54) **INTEGRATED PROCESS FOR THE PRODUCTION OF OLEFIN DERIVATIVES**
INTEGRIERTES VERFAHREN ZUR HERSTELLUNG VON OLEFINDERIVATEN
PROCEDE INTEGRE DE PRODUCTION DE DERIVES D'OLEFINES

(30) Priority: 03.04.2003 GB 0307758
(43) Date of publication of application: 28.12.2005
(73) Proprietor: INEOS EUROPE LIMITED, 79-87 Kingston Road Staines Middlesex TW18 1DT (GB)
(72) Inventor: LITTLE, Ian, Raymond, Thames Ditton, Surrey KT7 0BQ (GB); LUCY, Andrew, Richard, Brough, East Yorkshire HU15 2AA (GB); MAUNDERS, Barry, Martin, Woking, Surrey GU21 5TB (GB)
(74) Representative: Preece, Michael
(86) International application number: PCT/GB2004/001265
(87) International publication number: WO 2004/087838

(56) References cited:
- EP-A- 1 001 001
- GB-A- 2 325 237
- US-A- 3 987 119
- US-A- 5 981 818

## Description

The present invention relates to a process for the production of olefin derivatives from a mixed olefin/alkane feedstream. More particularly the present invention relates to an integrated process for the production of olefin derivatives, said integrated process comprising both cracking and olefin derivative processes.

Numerous processes are known for the cracking of a hydrocarbon feedstock to produce olefin containing streams. For example, non-catalytic cracking processes such as steam cracking and contacting with hot non-catalytic particulate solids are described in US 3,407,789, US 3,820,955, US 4,499,055 and US 4,814,067, and catalytic cracking processes such as fluid catalytic cracking and deep catalytic cracking are described in US 4,828,679, US 3,647,682, US 3,758,403, US 4,814, 067, US 4,980,053 and US 5,326,465. A further process for production of an olefin containing stream is auto-thermal cracking, as described in, for example, US 5,382,741 and US 5,625,111.

The olefins produced may themselves be used as feedstocks for olefin derivative processes. Numerous such processes are also known and include, for example, the use of olefins in polymerization processes to produce polyethylene, polypropylene and other polymers.

Conventionally the olefins stream produced from the cracking process has undergone extensive and costly purification to produce high purity olefin streams, often >99% wt% olefin, for use in the olefin derivative process. One of the most costly purification steps is the separation of olefins and alkanes of the same carbon number.

More recently, Purvis et al., US 5,981,818, have described a method of integrating cracking and olefin derivative processes utilizing dilute olefins, i.e. olefin streams containing significant quantities of saturated inert hydrocarbons. The olefin derivative processes described have relatively high conversion of olefins to olefin derivatives. The off-gas from the olefin derivative process thus contains little olefin and may be recycled to the cracker.

Olefins, and other unsaturated hydrocarbons, in the feed to a steam cracker will cause carbonaceous fouling of the process equipment. In general, the propensity to cause fouling will depend on the nature of the unsaturated hydrocarbon and its concentration. Nevertheless, even low levels of olefins will cause fouling and reduce the run-time of the steam cracker furnace (before the cracker must be stopped and cleaned). Therefore it is desirable to reduce the concentration of unsaturated hydrocarbons, such as olefins in the feed to the steam cracker, or short furnace run-times must be tolerated, with consequent financial and operational disadvantages.

Thus, the method of Purvis et al. would not apply for olefin derivative processes that are not high conversion processes, since in these processes the off-gas will still contain significant quantities of olefin and alkane.

Unless the amount of olefin in the off-gas stream is less than about 5mol%, such streams, if recycled to the cracker, can cause significant problems with coke formation, and significantly reduce run-times, due to the increased levels of olefin in the feed to the cracker. Although the recycle stream is diluted with "fresh" alkane-containing feed before being fed to the cracker, this "fresh" feed may also comprise alkene, and hence, depending on the relative amounts of recycle stream and fresh feed mixed, the level of olefins in the mixed feed can reach levels significantly above that in the "fresh" alkane-containing feed alone. In addition, even small increases in the levels of alkene in the feed to a cracker will reduce run-times, and due to the scale of present-day commercial steam cracking processes small changes in run-time can be commercially significant. Hence separation of olefin and alkane would still be required before recycle to the cracking process.

Although the off-gas stream comprising alkane and olefin may be recycled to the olefin derivative unit to improve conversion, without separation of "inert" impurities, such as the alkane, this will lead to a build-up of the "inert" impurities in the process. Hence separation of alkane from olefin is still required.

Keucher et al., WO 02/06188 describe an alternative system for production of an olefin derivative from a dilute olefins stream. In this system a high quality dilute olefins stream from an olefin unit is fed to an olefin derivative unit to produce an olefin derivative product. Unreacted olefin is separated from the vent stream in an olefins separation unit and recycled to the olefin derivative unit. A purge stream comprising ethane and lighter components is also produced and may be sent as a feed to an olefin unit. However the process of Keucher still employs significant olefin/alkane separation processes to prevent recycle of unreacted olefin from the olefin derivative unit to the olefin unit.

Hence an improved integrated process for an olefin unit and an olefin derivative unit is still required, in particular for an olefin derivative unit where the off-gas contains more than about 5mol% olefin.

The present invention provides a process for the production of an olefin derivative, which process comprises the steps of:
(a) cracking a paraffinic hydrocarbon containing feedstock to produce a first dilute olefins stream comprising both olefins and alkanes,
(b) reacting at least a portion of said first dilute olefins stream produced in step (a) to produce a first olefin derivative stream, comprising a first olefin derivative, and a second dilute olefins stream, comprising alkanes and at least 5 mol% unreacted olefins,
(c) auto-thermally cracking at least a portion of said second dilute olefms stream produced in step (b), said portion comprising alkanes and at least 5 mol% unreacted olefins.

Dilute olefins streams, as used herein, refers to olefin streams comprising both olefins and alkanes, for example, both ethylene and ethane. The dilute olefins streams preferably comprise at least 1wt% alkane. Preferably, the first dilute olefins stream comprises at least 50%, and up to 99%, by weight of olefin. The first dilute olefins stream may comprise at least 75wt% olefin, such as at least 90wt% olefin. The first dilute olefins stream preferably comprises up to 50wt% alkane, such as up to 10wt%.

The composition of the second dilute olefins stream will generally comprise less olefin than the first dilute olefins stream due to olefin conversion to produce the first olefin derivative in step (b). In particular, the olefin content of the second olefins stream will depend on the olefin content and the olefin conversion of the portion of the first dilute olefins stream reacted in step (b).

The cracking step (a) of the present invention may be performed using any suitable cracking process, such as a non-catalytic cracking process, for example steam cracking, a catalytic cracking process, or an autothermal cracking process. The cracking process of step (a) is preferably selected from (i) thermal cracking processes, for example of naphtha, (ii) steam cracking processes, for example of an alkane, of a mixture of alkanes or of naphtha and (iii) autothermal cracking processes, for example of an alkane, of a mixture of alkanes or of naphtha.

Thus, the paraffinic hydrocarbon containing feedstock fed to step (a) of the process of the present invention may suitably comprise a single alkane, such as ethane, a mixture of alkanes, such as NGL (natural gas liquids), or naphtha. The paraffinic hydrocarbon containing feedstock may additionally comprise one or more unsaturated hydrocarbons, one or more inert compounds (such as nitrogen), hydrogen and/or carbon oxides (said compounds being in addition to any such compounds that may be produced and recycled where the cracking step (a) is performed using an autothermal cracking process).

Auto-thermal cracking processes are described in, for example, US 5,382,741 and US 5,625,111. In an autothermal cracking process, paraffinic hydrocarbon-containing feedstock is reacted in the presence of a catalyst capable of supporting combustion beyond the normal fuel-rich limit of flammability, to produce a stream comprising olefins and alkanes.

It has now been found that auto-thermal cracking processes may be operated with higher levels of olefin in the feed than for cracking processes such as steam cracking.

In the present invention, at least a portion of the second dilute olefins stream is auto-thermally cracked. Because the auto-thermal cracking process of step (c) may be operated with higher levels of olefin in the feed than a non-autothermal cracking process, at least a portion of the second dilute olefins stream may be passed to the auto-thermal cracker without treatment to separate the olefin from the alkane. Preferably the portion of the second dilute olefins stream passed to the autothermal cracker comprises at least 50% of the alkane and at least 50% of the olefin in the second dilute olefins stream, especially at least 80% of the alkane and at least 80% of the olefin in the second dilute olefins stream. Most preferably the portion of the second dilute olefins stream passed to the autothermal cracker comprises essentially all of the alkanes and of the olefins in the second dilute olefins stream. The whole of the second dilute olefins stream may be passed directly to the auto-thermal cracking step, or, alternatively, the second dilute olefins stream may be treated to remove one or more components other than alkane and olefin therefrom, prior to the auto-thermal cracking step. Optionally, additional alkane-containing feed may be added to (the at least a portion of) the second dilute olefins stream before auto-thermal cracking. The additional feed may also comprise a low level of alkene.

The concentration of olefin (unreacted olefin from the second dilute olefins stream and additional olefin that may be present in any additional alkane-containing feed) in the feed to the auto-thermal cracking step may thus be greater or lower than that in the second dilute olefins stream. Typically, the concentration of olefin in the feed passed to the auto-thermal cracking step is at least 4 mol%, such as at least 5 mol%.

Such levels could cause significant coking in cracking processes such as steam cracking.

In one embodiment of the present invention the cracking step (a) is performed using a different cracker than the auto-thermal cracking step (c). Thus, both an auto-thermal cracker and a non-auto-thermal cracker, for example a steam cracker, may be used for the process of the invention. Both an auto-thermal cracker and a non-auto-thermal cracker may be present in the same location, for example, where the non-auto-thermal cracker has been debottlenecked by addition of an auto-thermal cracker. In this embodiment, the product from the auto-thermal cracking step (c), may be preferably added to the first dilute olefins stream obtained from step (a), prior to reaction of said stream in step (b). The non-auto-thermal cracking process of this embodiment is preferably a thermal cracking process, for example of naphtha, or a steam cracking process, for example of an alkane, of a mixture of alkanes or of naphtha.

Most preferably, the cracking step (a) in the first aspect of the present invention is an auto-thermal cracking step, as in step (c). Hence in a preferred embodiment, the first aspect provides a process for the production of an olefin derivative, which process comprises the steps of:
(a) auto-thermally cracking a feed comprising a paraffinic hydrocarbon containing feedstock and a recycle stream to produce a first dilute olefins stream comprising both olefins and alkanes,
(b) reacting at least a portion of said first dilute olefins stream produced in step (a) to produce a first olefin derivative stream, comprising a first olefin derivative, and a second dilute olefins stream, comprising alkanes and at least 5 mol% unreacted olefins,
(c) recycling at least a portion of said second dilute olefins stream produced in step (b) as the recycle stream in the auto-thermal cracking step of step (a), said portion comprising alkanes and at least 5 mol% unreacted olefins.

In this preferred embodiment of the present invention, at least a portion of the second dilute olefins stream is recycled to the auto-thermal cracking step (a). As described previously, the whole of the second dilute olefins stream may be recycled directly to the auto-thermal cracking step, or, alternatively, the second dilute olefins stream may be treated to remove one or more components other than alkane and olefin therefrom, prior to recycle to the auto-thermal cracking step. The paraffinic hydrocarbon containing feedstock may comprise a low level of alkene, for example as an impurity, typically at a level of 1 to 3mol%.

Thus, the concentration of olefin (unreacted olefin recycled from the second dilute olefins stream and additional olefin that may be present in paraffinic hydrocarbon containing feedstock) in the feed to the auto-thermal cracking step (a) may be greater or lower than that in the second dilute olefins stream. Typically, the concentration of olefin in the feed to the auto-thermal cracking step (a) is at least 4 mol%, such as at least 5 mol%.

The auto-thermal cracking process may be operated at any suitable pressure, such as, for example from 1 to 40 bar. Especially in the preferred embodiment of the first aspect of the present invention, where step (a) is an auto-thermal cracking step, the auto-thermal cracking process is preferably operated at a suitable pressure corresponding to the pressure of the first olefin derivative process i.e. to the process utilised in step (b) for reacting at least a portion of said first dilute olefins stream produced in step (a) to produce a first olefin derivative stream. For example, if the first olefin derivative process operates at relatively low pressures, such as 10 bar, it may be advantageous to operate the auto-thermal cracking process at a pressure from 5 to 15 bar, preferably 8 to 12 bar, to reduce the amount of compression required between the processes for the first dilute olefins stream and/or for the recycle stream. Similarly, if the first olefin derivative process operates at higher pressures, such as 30 bar, it may be advantageous to operate the auto-thermal cracking process at a pressure, for example, from 25 to 35 bar. Alternatively, it may be advantageous to operate the auto-thermal cracking process at relatively low pressures, such as 1 to 5 bar, even with first olefin derivative processes that operate at higher pressures than 5 bar.

The product stream from cracking process of step (a) (autothermal cracking or other) will generally comprise a mixture of olefins and alkanes. Preferably the product stream may undergo separation and purification steps, as known in the art, to remove, for example, one or more of hydrogen, methane, COₓ, acetylenic compounds and dienes. At least some of the separated compounds, especially hydrogen, acetylenic compounds and/or dienes that have been separated where step (a) is an auto-thermal cracking step, may be recycled to the cracking step (a). The product stream also preferably undergoes separation to produce, for example, a C₂ stream comprising predominantly ethane and ethylene, and a C₃ stream comprising predominantly propane and propylene. These streams may also be subjected to olefin purification steps to increase the olefin content. In certain embodiments of the present invention, certain components other than the olefins in the product stream may be desired in the first olefin derivative process. In particular, carbon monoxide and/or hydrogen may be retained in the product stream, and hence may be present in the first dilute olefins stream, where these are reactants in the first olefin derivative process, for example, where the first olefin derivative process is a hydroformylation process or a process for the production of polyketones.

All or part of one or more of the above streams comprising olefin and alkane may subsequently be used as the first dilute olefins stream. The extent of separation and purification of the product stream required to produce the dilute olefins stream will depend on the olefin derivative processes in which the dilute olefins stream is subsequently to be reacted.

However, as the present invention utilizes dilute olefins streams (comprising both olefins and alkanes), separation and purification stages will generally be less extensive than conventional separation and purification, and/or may allow debottlenecking of existing cracking processes - see, for example, US 5,981,818 and WO 02/06188.

In the embodiment of the present invention where the cracking step (a) is performed using a different cracker than the auto-thermal cracking step (c), the product stream from the auto-thermal cracking step (c) will generally comprise a mixture of olefins and alkanes. This stream maybe treated as described above for the product stream from cracking of the paraffinic hydrocarbon-containing feedstock, for example, in a series of separation and purification steps, to give an olefins stream suitable for a subsequent olefin derivative process. For example, the product stream from the auto-thermal cracking step (c) may be treated to produce a dilute olefins stream, which can subsequently be combined with the first dilute olefins stream produced in step (a) and reacted in step (b). Preferably the product stream from the auto-thermal cracking step (c) is added to the product stream from the cracking step (a), and the combined stream subjected to separation and purification as described above to give the first dilute olefins stream for step (b). This has the advantage that only one purification train is required.

The first dilute olefins stream is subsequently reacted to produce a first olefin derivative. This step may comprise reaction of the first dilute olefins stream in any suitable first olefin derivative process. The present invention has the advantage that olefin derivative processes that have relatively low olefin conversion may be employed, using dilute olefins streams, as the first olefin derivative process, and without requiring physical separation of the olefin and alkane from the off-gas (second dilute olefins stream). Hence the cost of producing high purity olefins streams as a feed or the cost of subsequent separation of the olefin and alkane can be avoided.

By low olefin conversion is meant less than 80% olefin conversion, such as 70% or lower.

In addition, certain olefin derivative processes which are conventionally operated at high conversion, such as having high conversion per pass or by recycle of unreacted olefin to produce high overall conversion, may advantageously be operated as lower conversion processes according to the process of the present invention since the unreacted components may be further utilised.

By high conversion is meant a process that produces a product stream comprising less than 5mol% olefins, preferably less than 3mol% olefins. Suitable processes typically have an olefin conversion of at least 95%. In particular, olefin derivative processes which are conventionally operated at high overall conversion by recycle of unreacted olefin often require a significant purge to prevent build-up of unreactive components in the recycle. The purges are often disposed of, for example by venting. Operating at a lower conversion (by reducing the recycle to the olefin derivative process) and recycling to an autothermal cracker according to the process of the first aspect of the present invention can reduce the requirement for a purge.

Where the dilute olefins stream comprises ethylene, suitable olefin derivative processes may comprise, for example, processes for the production of ethanol from ethylene and water, for the production of vinyl acetate, ethylene polymerisation processes and ethane tolerant processes for the production of ethylene oxide.

Where the dilute olefins stream comprises propylene, the olefin derivative processes may comprise, for example, processes for the production of propylene oxide, for the production of acrolein and propylene ammoxidation processes, as well as certain processes for the production of polypropylene.

The olefin derivative processes may also comprise processes utilising mixed dilute olefins streams, for example comprising ethylene and propylene. Suitable processes include, for example, ethylene/propylene co-polymerisation processes.

Other olefin derivative processes that may suitably be employed in step (b) of the present invention include processes for the production of ethyl benzene, the production of linear alpha olefins, the metathesis of ethylene with butene to give propene, hydroformylation of ethylene or propylene with CO and hydrogen, and production of polyketones from olefins and carbon monoxide, such as described in WO 93/01224.

Step (b) comprises reacting at least a portion of said first dilute olefins stream to produce a first olefin derivative stream and a second dilute olefins stream. Preferably, all of the first dilute olefins stream is reacted to produce said first olefin derivative stream and said second dilute olefins stream. However, in one embodiment of the present invention, a portion of said first dilute olefins stream may be reacted in one or more further olefin derivative processes to produce one or more further olefin derivative streams.

Step (b) may also comprise more than one olefin derivative processes operated in series. For example, the first dilute olefins stream may be reacted to produce a first olefin derivative stream and an intermediate dilute olefins stream, and at least a portion of said intermediate dilute olefins stream may be reacted to produce a further olefin derivative stream and a further dilute olefins stream. The further dilute olefins stream, and, optionally, any of the intermediate dilute olefins stream not reacted in the further olefin derivative unit, can then form the second dilute olefins stream of the invention.

In the present invention, at least a portion of the second dilute olefins stream is reacted in an auto-thermal cracking step, which may or may not be the same cracking step as step (a). Preferably, all of the second dilute olefins stream is reacted in the auto-thermal cracking step. In one embodiment of the first aspect of the present invention, a portion of said second dilute olefins stream may be reacted in one or more further olefin derivative processes to produce one or more further olefin derivatives before reacting in the auto-thermal cracking step, for example, before recycle to step (a) (where the cracking step in step (a) is an auto-thermal cracking step).

The invention will now be exemplified by reference to Figures 1 to 4 and the Examples.
Figure 1 represents in schematic form an integrated process for the production of an ethylene derivative according to the first aspect of the present invention.
Figure 2 represents in schematic form an integrated slurry loop polyethylene process for the production of polyethylene according to the first aspect of the present invention.
Figure 3 represents in schematic form an integrated polyketone process for the production of polyketones according to the first aspect of the present invention.
Figure 4 represents in schematic form an integrated metathesis and polypropylene process for the production of polypropylene according to the first aspect of the present invention.

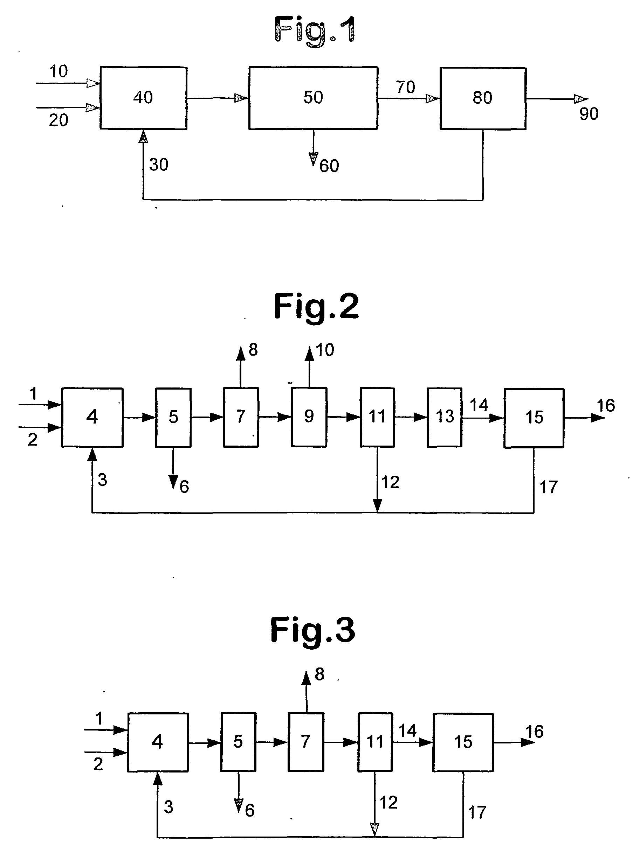

Referring to Figure 1, an ethane feed, 10, a recycle stream, 30 comprising 40% ethylene (C₂) and 60% ethane (C₂), and an oxygen feed, 20, are fed to an ATC reactor, 40. The mixed product stream is treated, 50, to produce a by-products stream, 60, and a first dilute ethylene stream, 70, comprising approximately 30% ethane and 70% ethylene. This dilute ethylene stream is passed to an ethylene derivative process, 80, of approximately 70% ethylene conversion per pass. The ethane is inert in said process. The olefin derivative product, 90, is separated, along with any other by-products formed, to leave a second dilute ethylene stream comprising ethane and unreacted ethylene, having a composition of approximately 40% ethylene and 60% ethane (and having approximately half the volume of the first dilute ethylene stream), which is recycled to the ATC reactor.

Referring to Figure 2, ethane, 1, and oxygen, 2, and a recycle stream, 3, comprising ethane and ethylene, are fed to an ATC reactor, 4. The product stream is passed to a quench, 5, from which is separated water and higher hydrocarbons, 6, and then to an amine wash, 7, to remove carbon dioxide and further water, 8. The remaining product stream is then passed to a demethaniser, 9, to remove hydrogen, carbon monoxide and methane, 10, and to a deethaniser, 11, to separate C3+ hydrocarbons, 12, which can be recycled to the ATC reactor, 4.

The remaining product stream is hydrogenated, 13, to remove acetylenic compounds and dienes, to form a first dilute ethylene stream, 14, comprising ethylene and ethane, which is passed to a slurry loop polyethylene process, 15, to produce a polyethylene product, 16, and a second dilute ethylene stream, 17, comprising ethane and unreacted ethylene, which is recycled to the ATC reactor, after addition of stream 12, as recycle stream 3.

Referring to Figure 3, ethane, 1, and oxygen, 2, and a recycle stream, 3, comprising ethane and ethylene, are fed to an ATC reactor, 4. The product stream is passed to a quench, 5, from which is separated water and higher hydrocarbons, 6, and then to an amine wash, 7, to remove carbon dioxide and further water, 8. The remaining product stream is then passed to a deethaniser, 11, to separate C3+ hydrocarbons, 12, which can be recycled to the ATC reactor, 4.

The remaining product stream, 14, forms a first dilute ethylene stream comprising ethylene, ethane, carbon monoxide and hydrogen, and is passed to a poylketones reactor, 15, where it is reacted to produce a polyketone product, 16, and a second dilute olefins stream, 17, which is recycled to the ATC reactor, 4, optionally after addition of C3+ hydrocarbons, 12, separated from the deethaniser.

In an alternative polyketone process (not shown), C3 hydrocarbons (propylene and propane) are not separated in the deethaniser, 11, but are fed to the polyketones reactor with the ethylene, ethane, carbon monoxide and hydrogen.

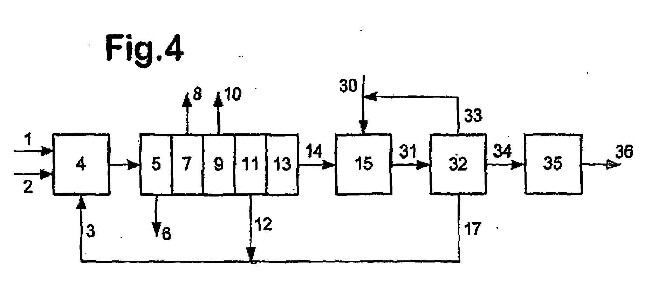

Referring to Figure 4, ethane, 1, and oxygen, 2, and a recycle stream, 3, comprising ethane and ethylene, are fed to an ATC reactor, 4. The product stream is passed to a series of separation steps, including a quench, an amine wash, a demethaniser, a deethaniser and hydrogenation, as described for Figure 2.

The remaining product stream, 14, forms a first dilute ethylene stream comprising ethylene and ethane, which is passed to a metathesis reactor, 15, where it is reacted with a butene feed, 30. The product stream, 31, is passed to a separation train, 32, such as one or more distillation columns, to separate out unreacted butene, 33, propylene, 34 and a second dilute ethylene stream, 17, comprising unreacted ethylene and ethane, which is recycled to the ATC reactor, 4, optionally after addition of C3+ hydrocarbons, 12, separated from the deethaniser, 11. Unreacted butenes may be recycled to the metathesis reactor, 15. The propene stream, 34, is passed to a polypropylene reactor, 35, to produce polypropylene, 36.

### Example 1

This example illustrates an integrated slurry loop polyethylene process for the production of polyethylene according to the process of Figure 2.
The slurry loop polyethylene process is operated at an ethylene conversion of 80%. The compositions of the respective streams in the process are given in Table 1.

**TABLE 1:**

| Stream Number (Fig 2) | Principle components | Volume of component (kilotons per annum) |
|---|---|---|
| 1 | Ethane | 750 |
| 2 | Oxygen | 466 |
| 3 | Ethane | 336 |
| | Ethylene | 80 |
| | C3+ compounds | 50 |
| 6 | Water and C5+ compounds | 378 |
| 8 | Carbon dioxide and water | 86 |
| 10 | Hydrogen, carbon monoxide and methane | 352 |
| 12 | C3+ compounds | 50 |
| 14 | Ethane | 336 |
| | Ethylene | 400 |
| 16 | Polyethylene | 320 |
| 17 | Ethane | 336 |
| | Ethylene | 80 |

The stream comprising C3+ compounds (stream 12) comprises predominantly propane (9wt%), propylene (50wt%), butanes (9wt%), butenes (7wt%) and butadiene (24wt%), with the remainder (approximately 1wt%) being C5+ hydrocarbons (including aromatics).

## Claims

1. A process for the production of an olefin derivative, which process comprises the steps of:
(a) cracking a paraffinic hydrocarbon containing feedstock to produce a first dilute olefins stream comprising both olefins and alkanes,
(b) reacting at least a portion of said first dilute olefins stream produced in step (a) to produce a first olefin derivative stream, comprising a first olefin derivative, and a second dilute olefins stream, comprising alkanes and at least 5 mol% unreacted olefins,
(c) auto-thermally cracking at least a portion of said second dilute olefins stream produced in step (b), said portion comprising alkanes and at least 5 mol% unreacted olefins.

2. The process according to claim 1, wherein the first dilute olefins stream comprises at least 50wt% olefin and at least 1wt% alkane.

3. The process according to claim 1 or claim 2, wherein the cracking step (a) is selected from (i) thermal cracking processes, (ii) steam cracking processes and (iii) autothermal cracking processes.

4. The process according to any one of the preceding claims, wherein the paraffinic hydrocarbon containing feedstock fed to step (a) comprises a single alkane, such as ethane, a mixture of alkanes, such as NGL (natural gas liquids), or naphtha.

5. The process according to any one of the preceding claims, wherein the portion of the second dilute olefins stream passed to the autothermal cracker in step (c) comprises at least 50% of the alkane and at least 50% of the olefin in the second dilute olefins stream.

6. The process according to any one of the preceding claims, wherein the concentration of olefin, corresponding to unreacted olefin from the second dilute olefins stream and additional olefin that may be present in any additional alkane-containing feed, corresponding to, in the feed passed to the auto-thermal cracking step is at least 4 mol%.

7. The process according to any one of the preceding claims, wherein the cracking step (a) is an auto-thermal cracking step, and the process for the production of an olefin derivative comprises the steps of:
(a) auto-thermally cracking a feed comprising a paraffinic hydrocarbon containing feedstock and a recycle stream to produce a first dilute olefins stream comprising both olefins and alkanes,
(b) reacting at least a portion of said first dilute olefins stream produced in step (a) to produce a first olefin derivative stream, comprising a first olefin derivative, and a second dilute olefins stream, comprising alkanes and at least 5 mol% unreacted olefins,
(c) recycling at least a portion of said second dilute olefins stream produced in step (b) as the recycle stream in the auto-thermal cracking step of step (a), said portion comprising alkanes and at least 5 mol% unreacted olefins.

## Patentansprüche

1. Verfahren zur Herstellung eines Olefinderivats, wobei das Verfahren die Schritte:
(a) Kracken eines paraffinischen Kohlenwasserstoff enthaltenden Einsatzproduktes zur Erzeugung eines ersten verdünnten Olefinstroms, der sowohl Olefine als auch Alkane umfaßt,
(b) Umsetzen zumindest eines Teils des ersten verdünnten Olefinstroms, der in Schritt (a) erzeugt wurde, um einen ersten Olefinderivatstrom, umfassend ein erstes Olefinderivat, und einen zweiten verdünnten Olefinstrom, umfassend Alkane und mindestens 5 mol-% nicht umgesetzte Olefine, zu erzeugen,
(c) autothermes Kracken zumindest eines Teils des zweiten verdünnten Olefinstroms, hergestellt in Schritt (b), wobei dieser Teil Alkane und mindestens 5 mol-% nicht umgesetzte Olefine umfaßt.

2. Verfahren nach Anspruch 1, worin der erste verdünnte Olefinstrom mindestens 50 Gew.-% Olefin und mindestens 1 Gew.-% Alkan umfaßt.

3. Verfahren nach Anspruch 1 oder Anspruch 2, worin der Krackschritt (a) aus (i) thermischen Krackverfahren, (ii) Dampfkrackverfahren und (iii) autothermen Krackverfahren ausgewählt wird.

4. Verfahren nach einem der vorhergehenden Ansprüche, worin das paraffinische Kohlenwasserstoff enthaltende Einsatzprodukt, der in Schritt (a) gespeist wird, ein einzelnes Alkan wie Ethan, ein Gemisch aus Alkanen wie NGL (Naturgasflüssigkeiten) oder Schwerbenzin umfaßt.

5. Verfahren nach einem der vorhergehenden Ansprüche, worin der Teil des zweiten verdünnten Olefinstroms, der in den autothermen Kracker in Schritt (c) eingeführt wird, mindestens 50 % des Alkans und mindestens 50 % des Olefins in dem zweiten verdünnten Olefinstrom umfaßt.

6. Verfahren nach einem der vorhergehenden Ansprüche, wobei die Konzentration an Olefin, die dem nicht umgesetzten Olefin aus dem zweiten verdünnten Olefinstrom und zusätzlichem Olefin entspricht, das in einer zusätzlichen Alkan-haltigen Speisung vorliegen kann, die der Speisung entspricht, die in den autothermen Krackschritt eingeführt wird, mindestens 4 mol-% beträgt.

7. Verfahren nach einem der vorhergehenden Ansprüche, worin der Krackschritt (a) ein autothermer Krackschritt ist, und das Verfahren zur Herstellung eines Olefinderivats die folgenden Schritte umfaßt:
(a) autothermes Kracken einer Speisung, umfassend ein paraffinisches Kohlenwasserstoff enthaltendes Einsatzprodukt und einen Umlaufstrom zur Erzeugung des ersten verdünnten Olefinstroms, umfassend sowohl Olefine als auch Alkane,
(b) Umsetzen zumindest eines Teils des ersten verdünnten Olefinstroms, erzeugt in Schritt (a), um einen ersten Olefinderivatstrom, der ein erstes Olefinderivat umfaßt, und einen zweiten verdünnten Olefinstrom, der Alkane und mindestens 5 mol-% nicht umgesetzte Olefine umfaßt, zu erzeugen,
(c) Rückführen zumindest eines Teils des zweiten verdünnten Olefinstroms, hergestellt in Schritt (b), als Umlaufstrom in den autothermen Krackschritt von Schritt (a), wobei dieser Teil Alkane und mindestens 5 mol-% nicht umgesetzte Olefine umfaßt.

## Revendications

1. Procédé de production d'un dérivé d'oléfines, lequel procédé comprend les étapes consistant à :
(a) craquer une charge d'alimentation contenant des hydrocarbures paraffiniques pour produire un premier flux d'oléfines dilué comprenant à la fois des oléfines et des alcanes,
(b) faire réagir au moins une partie dudit premier flux d'oléfines dilué issu de l'étape (a) pour produire un premier flux de dérivés d'oléfines, comprenant un premier dérivé d'oléfines et un second flux d'oléfines dilué, comprenant des alcanes et au moins 5 % en mole d'oléfines inaltérées,
(c) effectuer un craquage auto-thermique d'au moins une partie dudit second flux d'oléfines dilué issu de l'étape (b), ladite partie comprenant des alcanes et au moins 5 % en mole d'oléfines inaltérées.

2. Procédé selon la revendication 1, dans lequel le premier flux d'oléfines dilué comprend au moins 50 % en poids d'oléfine et au moins 1 % en poids d'alcane.

3. Procédé selon la revendication 1 ou la revendication 2, dans lequel l'étape de craquage (a) est choisie parmi (i) des procédés de craquage thermique, (ii) des procédés de vapocraquage et (iii) des procédés de craquage auto-thermique.

4. Procédé selon l'une quelconque des revendications précédentes, dans lequel la charge d'alimentation contenant des hydrocarbures paraffiniques apportée à l'étape (a) comprend un seul alcane, tel que l'éthane, un mélange d'alcanes, tel que les LGN (liquides de gaz naturel), ou le naphta.

5. Procédé selon l'une quelconque des revendications précédentes, dans lequel la partie du second flux d'oléfines dilué passant par le craqueur auto-thermique dans l'étape (c) comprend au moins 50 % de l'alcane et au moins 50 % de l'oléfine du second flux d'oléfines dilué.

6. Procédé selon l'une quelconque des revendications précédentes, dans lequel la concentration en oléfines, correspondant à l'oléfine inaltérée du second flux d'oléfines dilué et à l'oléfine supplémentaire pouvant être présente dans toute charge d'alimentation supplémentaire contenant un alcane, dans la charge d'alimentation passant par l'étape de craquage auto-thermique est d'au moins 4 % en mole.

7. Procédé selon l'une quelconque des revendications précédentes, dans lequel l'étape de craquage (a) est une étape de craquage auto-thermique, et le procédé de production d'un dérivé d'oléfines comprend les étapes consistant à :
(a) effectuer le craquage auto-thermique d'une alimentation comprenant une charge d'alimentation contenant des hydrocarbures paraffiniques et un flux de recyclage pour produire un premier flux d'oléfines dilué comprenant à la fois des oléfines et des alcanes,
(b) faire réagir au moins une partie dudit premier flux d'oléfines dilué issu de l'étape (a) pour produire un premier flux de dérivés d'oléfines, comprenant un premier dérivé d'oléfines et un second flux d'oléfines dilué, comprenant des alcanes et au moins 5 % en mole d'oléfines inaltérées,
(c) recycler au moins une partie dudit second flux d'oléfines dilué issu de l'étape (b) pour former le flux de recyclage de l'étape de craquage auto-thermique de l'étape (a), ladite partie comprenant des alcanes et au moins 5 % en mole d'oléfines inaltérées.
